# EUROPÄISCHE PATENTSCHRIFT

(11) **EP 1 368 713 B1**
(45) Veröffentlichungstag und Bekanntmachung des Hinweises auf die Patenterteilung: **17.08.2005**
(21) Anmeldenummer: 02700255.9
(22) Anmeldetag: 19.02.2002
(51) Int. Cl.: G05B 9/02, F16P 3/00

(54) **VERFAHREN UND VORRICHTUNG ZUM FEHLERSICHEREN ÜBERWACHEN DER DREHBEWEGUNG EINER WELLE**
METHOD AND DEVICE FOR ERROR-FREE MONITORING OF THE ROTATION OF A SHAFT
PROCEDE ET DISPOSITIF POUR SURVEILLER SANS ERREUR LE MOUVEMENT DE ROTATION D'UN ARBRE

(30) Priorität: 08.03.2001 DE 10112230
(43) Veröffentlichungstag der Anmeldung: 10.12.2003
(73) Patentinhaber: PILZ GmbH & CO., 73760 Ostfildern (DE)
(72) Erfinder: SCHUMACHER, Manfred, 73732 Esslingen (DE)
(74) Vertreter: Duhme, Torsten
(86) Internationale Anmeldenummer: PCT/EP2002/001747
(87) Internationale Veröffentlichungsnummer: WO 2002/071160

(56) Entgegenhaltungen:
- DE-A- 2 801 326
- DE-B- 1 202 718
- US-A- 5 931 008

## Beschreibung

Die vorliegende Erfindung betrifft ein Verfahren zum fehlersicheren Überwachen der Drehbewegung einer Welle zur Wellenbruchüberwachung bei einer Presse, mit den Schritten:
- Erzeugen einer charakteristischen Impulsfolge mit einer Anzahl zeitlich aufeinanderfolgender Impulse, deren zeitlicher Abstand von der Drehbewegung der Welle abhängig ist,
- Bestimmung einer Überwachungszeitspanne,
- Überwachen, ob innerhalb der Überwachungszeitspanne ein erwarteter Impuls der Impulsfolge auftritt, und
- Erzeugen eines Steuersignals, wenn der erwartete Impuls innerhalb der Überwachungszeitspanne ausbleibt.

Ein derartiges Verfahren ist aufgrund seiner Verwendung in industriellen Produktionsprozessen bekannt. Bspw. wird ein solches Verfahren bei einem Standardfunktionsbaustein mit der Bezeichnung SB 077 verwendet, der von der Anmelderin der vorliegenden Erfindung angeboten und vertrieben wird. Dieser Standardfunktionsbaustein ist in einer Bedienungsanleitung mit der Sachnummer 19 196 dokumentiert, und er dient zur sogenannten Wellenbruchüberwachung bei mechanischen Pressen.

Die Erfindung bezieht sich auf die fehlersichere Überwachung von Drehbewegungen. "Fehlersicher" bedeutet dabei in diesem Zusammenhang, daß die entsprechenden Geräte und Einrichtungen zumindest die Kategorie 3 der Europäischen Norm EN 954-1 oder anerkanntermaßen vergleichbare Kriterien erfüllen.

Der Ablauf einer mechanischen Presse wird in der Regel über ein sogenanntes Nockenschaltwerk gesteuert. Ein solches Schaltwerk erzeugt eine Anzahl aufeinanderfolgender Impulse, deren zeitlicher Abstand von der Drehbewegung der gesteuerten bzw. überwachten Welle abhängig ist. Das Nockenschaltwerk ist entweder direkt über ein Getriebe oder indirekt über eine Kette oder einen Zahnriemen mit der Welle verbunden. Bei einer mechanischen Presse, von der im Betrieb eine erhebliche Gefahr für das Bedienpersonal ausgeht, müssen die Impulse des Nockenschaltwerks fehlersicher überwacht werden, um zu gewährleisten, daß die Presse ordnungsgemäß arbeitet. Beim Ausbleiben der Impulse erfolgt eine sofortige, fehlersichere Abschaltung der Presse, da ansonsten ein unkontrollierter und damit gefährlicher Zustand vorliegt.

Die Überwachung der Impulsfolge sowie die Abschaltung der Presse geschieht mit einem fehlersicheren Überwachungsgerät oder mit einer fehlersicheren SPS-Steuerung im oben genannten Sinne. Aufgrund der sicherheitskritischen Verwendung müssen die Geräte nämlich besonders hohe Anforderungen an ihre Eigenfehlersicherheit erfüllen. Sie werden von den zuständigen Aufsichtsbehörden, bspw. den Berufsgenossenschaften, nur dann für eine sicherheitskritische Verwendung zugelassen, wenn die Einhaltung der Normen und Kriterien vollständig nachgewiesen ist.

Die bisher bekannten Überwachungsgeräte sind aus diesen Gründen relativ einfach aufgebaut. Sie arbeiten ausschließlich mit fest einstellbaren Überwachungszeitspannen. Dies führt bei Pressen mit variabler Hubzahl allerdings zu dem Problem, daß die Überwachungszeitspanne auf die kleinste auftretende Hubzahl und damit auf die langsamste Drehbewegung der Welle eingestellt werden muß. Anderenfalls werden bei geringen Hubzahlen Fehlalarme ausgelöst, die zu unnötigen und teuren Stillstandszeiten führen. Bei größeren Hubzahlen ergeben sich jedoch relativ lange Reaktionszeiten beim Abschalten, was in einer Notfallsituation nachteilig ist.

Aus DE 28 01 326 Al sind ein Verfahren und eine Vorrichtung zur Steuerung eines Antiblockiersystems bei einem Kraftfahrzeug bekannt. Um eine hohe Funktionssicherheit sowohl im hohen als auch im niedrigen Geschwindigkeitsbereich zu gewährleisten, wird darin vorgeschlagen, abhängig von der Geschwindigkeit eines Rades und damit abhängig vom Zeitintervall zwischen zwei letzten Impulsen eine maximale Überwachungszeitspanne zu bestimmen, innerhalb der das Eintreffen eines nächsten Impulses erwartet wird. Mit anderen Worten wird hiernach die Zeitspanne zwischen zwei Impulsen gemessen und der erhaltene Wert als Berechnungsgrundlage für die nachfolgende Zeitspanne zugrunde gelegt. Ein Hinweis, das beschriebene Verfahren auch abseits der KFZ-Technik zu verwenden, findet sich in dieser Druckschrift nicht.

Es ist daher eine Aufgabe der vorliegenden Erfindung, ein Verfahren der eingangs genannten Art dahingehend weiterzubilden, daß bei vertretbarem Aufwand eine noch höhere Sicherheit für das beteiligte Bedienpersonal erreicht wird.

Diese Aufgabe wird durch ein Verfahren der eingangs genannten Art gelöst, bei dem die Überwachungszeitspanne während der Überwachung wiederholt an den zeitlichen Abstand der Impulse angepaßt wird. Die Aufgabe wird ferner durch die Verwendung einer Vorrichtung gelöst, mit ersten Mitteln zum Aufnehmen einer charakteristischen Impulsfolge mit einer Anzahl zeitlich aufeinanderfolgender Impulse, deren zeitlicher Abstand von der Drehbewegung einer Welle abhängig ist, mit zweiten Mitteln zum Bestimmen einer Überwachungszeitspanne, mit dritten Mitteln zum Überwachen, ob innerhalb der Überwachungszeitspanne ein erwarteter Impuls der Impulsfolge auftritt, und mit vierten Mitteln zum Erzeugen eines Steuersignals, wenn der erwartete Impuls innerhalb der Überwachungszeitspanne ausbleibt, wobei die zweiten Mittel die Überwachungszeitspanne während der Überwachung wiederholt an den zeitlichen Abstand der Impulse anpassen, zur Wellenbruchüberwachung bei einer Presse.

Im Gegensatz zu den bisher bekannten, gattungsgemäßen Überwachungseinrichtungen zur Wellenbruchüberwachung erfolgt die Überwachung der Impulsfolge hier erstmals adaptiv im Hinblick auf die jeweils aktuellen Betriebsparameter der überwachten Maschine. Die Zeitbasis der Überwachung wird jeweils an die aktuelle Drehgeschwindigkeit der Welle angepaßt. Infolgedessen wird das Ausbleiben eines erwarteten Impulses unabhängig von der aktuellen Drehzahl der Welle und damit unabhängig von einer Hubzahl der Presse mit geringster Verzögerungszeit erkannt. Das Überwachungsgerät kann daher in kürzerer Zeit auf einen kritischen Fehlerzustand reagieren und die überwachte Maschine, wie bspw. eine Presse, abschalten. Die verkürzten Reaktionszeiten bedeuten eine höhere Sicherheit für das beteiligte Bedienpersonal.

Darüber hinaus kann die bisher erforderliche manuelle Einstellung der Überwachungszeitspanne am Überwachungsgerät entfallen. Hierdurch werden Fehler aufgrund menschlichen Versagens vermieden, was die Sicherheit für das beteiligte Bedienpersonal nochmals erhöht. Als Nebeneffekt wird außerdem der Installations- bzw. Einrichteaufwand vor der Inbetriebnahme der Presse verringert.

In einer Ausgestaltung der Erfindung wird die Überwachungszeitspanne in Abhängigkeit von dem zeitlichen Abstand zweier Impulsflanken bestimmt.

Alternativ hierzu wäre es bspw. auch denkbar, die Überwachungszeitspanne in Abhängigkeit von einer Momentanfrequenz der Impulsfolge zu bestimmen. Die genannte Maßnahme kann demgegenüber einfacher und im Ablauf schneller realisiert werden. Dies ermöglicht eine weitere Minimierung der Reaktionszeiten beim Abschalten der Maschine.

In einer weiteren Ausgestaltung wird die Überwachungszeitspanne in Abhängigkeit von unmittelbar aufeinanderfolgenden Impulsflanken bestimmt.

Diese Maßnahme ermöglicht eine besonders schnelle Anpassung der Überwachungszeitspanne an die Veränderung der Drehbewegung der überwachten Welle. Damit lassen sich die Reaktionszeiten des Überwachungsgerätes noch weiter minimieren.

In einer weiteren Ausgestaltung wird die Überwachungszeitspanne für jeden erwarteten Impuls neu bestimmt.

Aufgrund dieser Maßnahme wird die Überwachungszeitspanne jeweils optimal an die Drehbewegung der überwachten Welle angepaßt. Infolgedessen werden trotz geringstmöglicher Überwachungszeitspannen Fehlalarme sehr zuverlässig vermieden.

In einer weiteren Ausgestaltung wird beim Schritt des Überwachens das Auftreten jeder Impulsflanke des erwarteten Impulses überwacht.

In dieser Ausgestaltung der Erfindung wird nicht das Auftreten eines vollständigen Impulses abgewartet, sondern es wird bereits das Auftreten jeder einzelnen Impulsflanke des Impulses überwacht. Das Auftreten eines vollständigen Impulses wird praktisch doppelt kontrolliert. Dies ermöglicht eine noch schnellere Reaktionszeit und trägt somit nochmals zu einer Optimierung der Sicherheit bei.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: Eine schematische Darstellung einer erfindungsgemäßen Vorrichtung zur Wellenbruchüberwachung bei einer Exzenterpresse, und
- Fig. 2: Eine Darstellung der zeitlichen Zusammenhänge beim Überwachen der charakteristischen Impulsfolge.

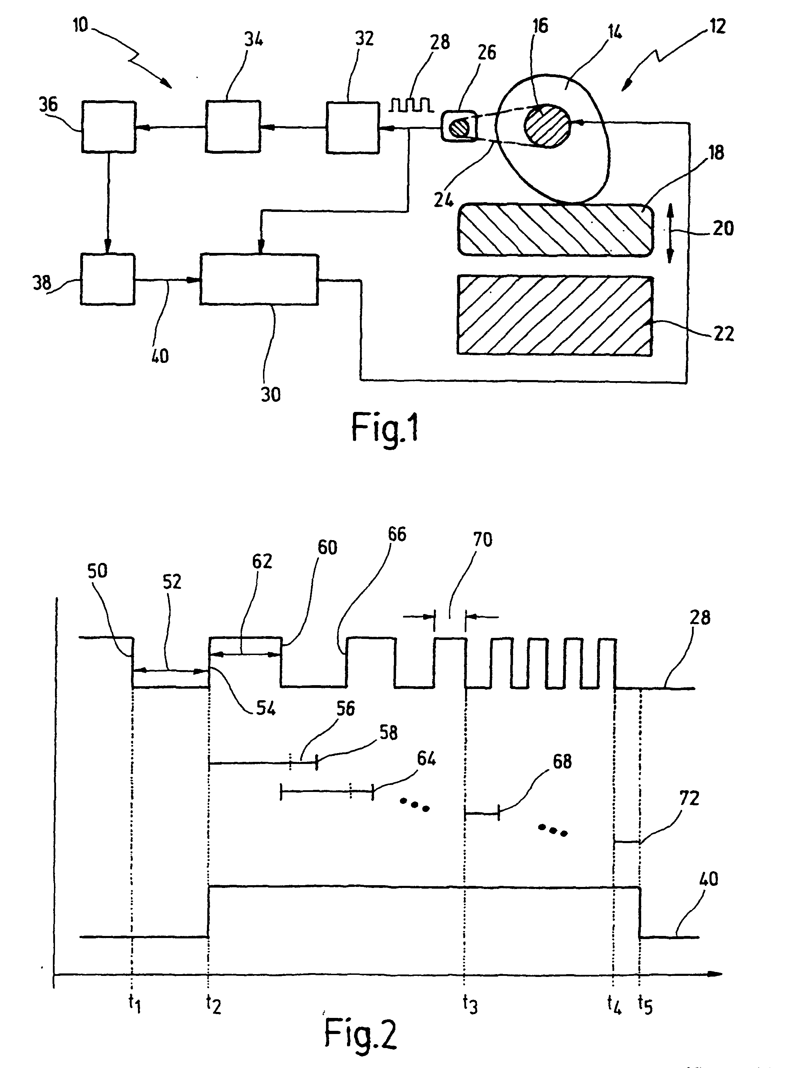

In Fig. 1 ist eine erfindungsgemäße Vorrichtung in ihrer Gesamtheit mit der Bezugsziffer 10 bezeichnet.

Die Vorrichtung 10 dient zur fehlersicheren Überwachung des Betriebsablaufs einer Exzenterpresse 12, die hier nur schematisch dargestellt ist. Die Presse 12 besitzt einen Exzenter 14, der auf einer Welle 16 angeordnet ist. Über die Kombination Welle/Exzenter wird ein sogenannter Stößel 18 in Richtung eines Pfeils 20 bewegt. In seiner abgesenkten Stellung wirkt der Stößel 18 mit einem in der Regel feststehenden Pressentisch 22 zusammen, um dabei ein Werkstück in eine gewünschte Form zu bringen. Der Aufbau einer solchen Presse ist an sich bekannt und daher im vorliegenden nicht weiter ausgeführt.

Die Welle 16 der Presse 12 ist in dem gezeigten Ausführungsbeispiel über eine Kette 24 mit einem Nockenschaltwerk 26 verbunden. Alternativ zu der Kette 24 könnte auch ein Zahnriemen oder ein Getriebe Verwendung finden. Eine solche Anordnung sowie entsprechende Nockenschaltwerke sind bei der Steuerung von Pressen ebenfalls hinreichend bekannt.

Das Nockenschaltwerk 26 erzeugt in Abhängigkeit von der Drehbewegung der Welle 16 eine Impulsfolge 28, die in an sich bekannter Weise einer Steuereinheit 30 zum Steuern der Presse 12 zugeführt ist. Die Steuereinheit 30 ist bspw. eine SPS-Steuerung.

Die Impulsfolge 28 ist des weiteren der erfindungsgemäßen Vorrichtung 10 zugeführt, um die fehlersichere Überwachung und Not-Abschaltung der Presse 12 zu ermöglichen. Dabei sei hier angemerkt, daß die Impulsfolge 28 nur schematisch dargestellt ist. In der Praxis kann sie auch mehrere verschiedene Impulsfolgen beinhalten, die von der Vorrichtung 10 und der Steuereinheit 30 verschieden ausgewertet werden.

Die Vorrichtung 10 beinhaltet erste Mittel 32, um die vom Nokkenschaltwerk 26 erzeugte Impulsfolge 28 aufzunehmen. Bspw. handelt es sich hierbei um die I/O-Karte einer fehlersicheren SPS-Steuerung, wie sie von der Anmelderin der vorliegenden Erfindung vertrieben wird.

Die aufgenommene Impulsfolge 28 ist zweiten Mitteln 34 zugeführt, die in der nachfolgend dargestellten Weise eine Überwachungszeitspanne bestimmen. Mit Hilfe der dritten Mittel 36 wird anschließend überprüft, ob innerhalb der bestimmten Überwachungszeitspanne ein nächster, erwarteter Impuls der Impulsfolge 28 auftritt. Beim Ausbleiben des erwarteten Impulses innerhalb der Überwachungszeitspanne erzeugen vierte Mittel 38 ein Steuersignal 40, das gegebenenfalls eine fehlersichere Abschaltung der Presse 12 bewirkt.

Gemäß einem bevorzugten Ausführungsbeispiel der Erfindung sind die zweiten, dritten und vierten Mittel 34, 36, 38 als Software-Bausteine auf einer fehlersicheren SPS-Steuerung realisiert, wie sie von der Anmelderin der vorliegenden Erfindung unter der Bezeichnung "PSS" vertrieben wird. Die SPS-Steuerung kann dabei auch die Steuereinheit 30 beinhalten. Alternativ können die Mittel 32 - 34 jedoch auch in einem speziellen, eigenständigen Überwachungsgerät zur Wellenbruchüberwachung implementiert sein.

Die Funktionsweise der Vorrichtung 10 ergibt sich aus der nachfolgenden Darstellung der zeitlichen Zusammenhänge in Fig. 2. Dabei bezeichnen gleiche Bezugszeichen dieselben Elemente wie in Fig. 1.

In Fig. 2 ist der zeitliche Zusammenhang zwischen der Impulsfolge 28 und dem Steuersignal 40 dargestellt. Zum Zeitpunkt t₁ erkennen die ersten Mittel 32 eine erste Impulsflanke 50 der Impulsfolge 28. Diese Impulsflanke triggert eine Zeitmessung, die den zeitlichen Abstand 52 bis zum Auftreten der nächsten Impulsflanke 54 bestimmt. Die zweiten Mittel 34 bestimmen anschließend aus dem zeitlichen Abstand 52 zuzüglich einer Toleranzzeit 56 eine erste Überwachungszeitspanne 58. Außerdem erkennt die Vorrichtung 10 mit der zweiten Impulsflanke 54, daß eine Impulsfolge 28 vorliegt. Das Steuersignal 40 wird daher zum Zeitpunkt t₂ eingeschaltet. Die Presse 12 kann nun in Betrieb genommen werden.

Die dritten Mittel 36 überwachen, ob innerhalb der ersten Überwachungszeitspanne 58 eine nächste (erwartete) Impulsflanke 60 auftritt. Ist dies, wie in Fig. 2 dargestellt, der Fall, bleibt das Steuersignal 40 eingeschaltet und die Presse 12 kann weiter betrieben werden.

Des weiteren messen die zweiten Mittel 34 den zeitlichen Abstand 62 zwischen den Impulsflanken 54 und 60, und sie bestimmen daraus eine zweite Überwachungszeitspanne 64, innerhalb derer die nächste erwartete Impulsflanke 66 auftreten muß. Diese Schritte wiederholen sich fortlaufend.

Beispielhaft ist zum Zeitpunkt t₃ der Beginn einer weiteren Überwachungszeitspanne 68 dargestellt. Die Länge dieser Überwachungszeitspanne 68 hängt von dem zeitlichen Abstand 70 der beiden vorausgehenden Impulsflanken ab. Da die Überwachungszeitspanne während der Überwachung laufend an den zeitlichen Abstand der beiden vorausgehenden Impulsflanken und damit an den Abstand der Impulse angepaßt wird, ist die Überwachungszeitspanne 68 hier deutlich kürzer als die Überwachungszeitspanne 58. Ein solcher zeitlicher Zusammenhang ergibt sich bspw. beim Hochfahren der Presse 12 auf eine maximale Hubzahl oder bei einer Presse mit variabler Hubzahl.

Zum Zeitpunkt t₄ wird in Abhängigkeit von der vorhergehenden Impulslänge eine weitere Überwachungszeitspanne 72 gestartet. Wie in Fig. 2 dargestellt, bleibt jedoch die bis zum Zeitpunkt t₅ erwartete nächste Impulsflanke aus. Dies hat zur Folge, daß die vierten Mittel 38 das Steuersignal 40 fehlersicher abschalten, was eine sofortige, ebenfalls fehlersichere Abschaltung der Presse 12 zur Folge hat. Das Ausbleiben des erwarteten Impulses kann bspw. dadurch verursacht sein, daß die Kette 24 gerissen ist, wodurch das Nockenschaltwerk 26 von der Welle 16 getrennt wird. In diesem Fall, der in der Fachterminologie als Wellenbruch bezeichnet wird, ist es möglich, daß der Stößel 20 der Presse 12 noch bewegt wird, obwohl der Steuerung 12 ein Pressenstillstand signalisiert wird. Dieser für eine Bedienperson gefährliche Zustand wird aufgrund der Erfindung mit geringstmöglicher Reaktionszeit beendet. Darüber hinaus findet eine Abschaltung der Presse 12 jedoch auch in allen anderen Fällen statt, in denen ein erwarteter Impuls der Impulsfolge 28 innerhalb der jeweils aktuellen Überwachungszeitspanne ausbleibt.

## Patentansprüche

1. Verfahren zum fehlersicheren Überwachen der Drehbewegung einer Welle (16) zur Wellenbruchüberwachung bei einer Presse (12), mit den Schritten:
- Erzeugen einer charakteristischen Impulsfolge (28) mit einer Anzahl zeitlich aufeinanderfolgender Impulse, deren zeitlicher Abstand (52, 62, 70) von der Drehbewegung der Welle (16) abhängig ist,
- Bestimmen einer Überwachungszeitspanne (58, 68, 72),
- Überwachen, ob innerhalb der Überwachungszeitspanne (58, 68, 72) ein erwarteter Impuls der Impulsfolge (28) auftritt, und
- Erzeugen eines Steuersignals (40), wenn der erwartete Impuls innerhalb der Überwachungszeitspanne (58, 68, 72) ausbleibt,
**dadurch gekennzeichnet, daß** die Überwachungszeitspanne (58, 68, 72) während der Überwachung wiederholt an den zeitlichen Abstand (52, 62, 70) der Impulse angepaßt wird.

2. Verfahren nach Anspruch 1, **dadurch gekennzeichnet, daß** die Überwachungszeitspanne (58, 68, 72) in Abhängigkeit von dem zeitlichen Abstand (52, 62, 70) zweier Impulsflanken (50, 54, 60) bestimmt wird.

3. Verfahren nach Anspruch 2, **dadurch gekennzeichnet, daß** die Überwachungszeitspanne (58, 68, 72) in Abhängigkeit von unmittelbar aufeinanderfolgenden Impulsflanken (58, 68, 72) bestimmt wird.

4. Verfahren nach einem der Ansprüche 1 bis 3, **dadurch gekennzeichnet, daß** die Überwachungszeitspanne (58, 68, 72) für jeden erwarteten Impuls neu bestimmt wird.

5. Verfahren nach einem der Ansprüche 1 bis 4, **dadurch gekennzeichnet, daß** beim Schritt des Überwachens das Auftreten jeder Impulsflanke (58, 68, 72) des erwarteten Impulses überwacht wird.

6. Verwendung einer Vorrichtung mit ersten Mitteln (32) zum Aufnehmen einer charakteristischen Impulsfolge (28) mit einer Anzahl zeitlich aufeinanderfolgender Impulse, deren zeitlicher Abstand (52, 62, 70) von der Drehbewegung einer Welle (16) abhängig ist, mit zweiten Mitteln (34) zum Bestimmen einer Überwachungszeitspanne (58, 68, 72), mit dritten Mitteln (36) zum Überwachen, ob innerhalb der Überwachungszeitspanne (58, 68, 72) ein erwarteter Impuls der Impulsfolge (28) auftritt, und mit vierten Mitteln (38) zum Erzeugen eines Steuersignals (40), wenn der erwartete Impuls innerhalb der Überwachungszeitspanne (58, 68, 72) ausbleibt, wobei die zweiten Mittel (34) die Überwachungszeitspanne (58, 68, 72) während der Überwachung wiederholt an den zeitlichen Abstand (52, 62, 70) der Impulse anpassen, zur Wellenbruchüberwach ung bei einer Presse (12).

## Claims

1. A method for the failsafe monitoring of the rotational movement of a shaft (16) for shear pin monitoring in the case of a press (12), comprising the steps of:
- generating a characteristic pulse train (28) with a number of pulses following one another at successive times, the time interval (52, 62, 70) of which is dependent on the rotational movement of the shaft (16),
- determining a monitoring time period (58, 68, 72),
- monitoring whether an expected pulse of the pulse train (28) occurs within the monitoring time period (58, 68, 72), and
- generating a control signal (40) if the expected pulse does not occur within the monitoring time period (58, 68, 72),
**characterized in that** the monitoring time period (58, 68, 72) is repeatedly adapted to the time interval (52, 62, 70) of the pulses during the monitoring.

2. The method of claim 1, **characterized in that** the monitoring time period (58, 68, 72) is determined as a function of the time interval (52, 62, 70) of two pulse edges (50, 54, 60).

3. The method of claim 2, **characterized in that** the monitoring time period (58, 68, 72) is determined as a function of directly successive pulse edges (58, 68, 72).

4. The method of any of claims 1 to 3, **characterized in that** the monitoring time period (58, 68, 72) is newly determined for each expected pulse.

5. The method of any of claims 1 to 4, **characterized in that** the occurrence of each pulse edge (58, 68, 72) of the expected pulse is monitored during the monitoring step.

6. The use of a device having first means (32) for picking up a characteristic pulse train (28) with a number of pulses following one another at successive times, the time interval (52, 62, 70) of which is dependent on the rotational movement of a shaft (16), having second means (34) for determining a monitoring time period (58, 68, 72), having third means (36) for monitoring whether an expected pulse of the pulse train (28) occurs within the monitoring time period (58, 68, 72), and having fourth means (38) for generating a control signal (40) when the expected pulse does not occur within the monitoring time period (58, 68, 72), the second means (34) repeatedly adapting the monitoring time period (58, 68, 72) to the time interval (52, 62, 70) of the pulses during the monitoring, for shear pin monitoring in the case of a press (12).

## Revendications

1. Procédé de surveillance sans erreur du mouvement de rotation d'un arbre (16) en vue de surveiller une rupture d'arbre dans une presse (12), comportant les étapes :
- générer un train d'impulsions caractéristiques (28) avec un nombre d'impulsions se succédant dans le temps, dont l'intervalle de temps (52, 62, 70) dépend du mouvement de rotation de l'arbre (16) ;
- déterminer une période de surveillance (58, 68, 72) ;
- surveiller si, à l'intérieur de la période de surveillance (58, 68, 72), il se produit une impulsion attendue du train d'impulsions (28) ; et
- générer un signal de commande (40) lorsque l'impulsion attendue ne se produit pas à l'intérieur de la période de surveillance (58, 68, 72) ;
**caractérisé en ce que**, au cours de la surveillance, la période de surveillance (58, 68, 72) est adaptée de manière répétitive à l'intervalle de temps (52, 62, 70) entre les impulsions.

2. Procédé selon la revendication 1, **caractérisé en ce que** la période de surveillance (58, 68, 72) est déterminée en fonction de l'intervalle de temps (52, 62, 70) entre deux flancs d'impulsions (50, 54, 60).

3. Procédé selon la revendication 2, **caractérisé en ce que** la période de surveillance (58, 68, 72) est déterminée en fonction des flancs d'impulsions (50, 54, 60) se succédant immédiatement.

4. Procédé selon l'une quelconque des revendications 1 à 3, **caractérisé en ce que** la période de surveillance (58, 68, 72) est déterminée à nouveau pour chaque impulsion attendue.

5. Procédé selon l'une quelconque des revendications 1 à 4, **caractérisé en ce que**, dans l'étape de surveillance, l'apparition de chaque flanc d'impulsion (50, 54, 60) de l'impulsion attendue est surveillée.

6. Utilisation d'un dispositif avec des premiers moyens (32) destinés à enregistrer un train d'impulsions caractéristiques (28) avec un nombre d'impulsions se succédant dans le temps, dont l'intervalle de temps (52, 62, 70) dépend du mouvement de rotation d'un arbre (16), avec des deuxièmes moyens (34) destinés à déterminer une période de surveillance (58, 68, 72), avec des troisièmes moyens (36) destinés à contrôler si, à l'intérieur de la période de surveillance (58, 68, 72), il se produit une impulsion attendue du train d'impulsions (28), et avec des quatrièmes moyens (38) destinés à générer un signal de commande (40) lorsque l'impulsion attendue ne se produit pas à l'intérieur de la période de surveillance (58, 68, 72), les deuxièmes moyens (34) adaptant de manière répétitive, pendant la surveillance, la période de surveillance (58, 68, 72) à l'intervalle de temps (52, 62, 70) entre les impulsions, en vue de surveiller la rupture de l'arbre dans une presse (12).
